# EUROPEAN PATENT SPECIFICATION

(11) **EP 1 646 509 B1**
(45) Date of publication and mention of the grant of the patent: **18.06.2008**
(21) Application number: 04763069.4
(22) Date of filing: 02.07.2004
(51) Int. Cl.: B41M 5/00

(54) **INKJET RECORDING ELEMENT**
TINTENSTRAHLAUFZEICHNUNGSELEMENT
ELEMENT D'IMPRESSION A JET D'ENCRE

(30) Priority: 18.07.2003 FR 0308847
(43) Date of publication of application: 19.04.2006
(73) Proprietor: Eastman Kodak Company, Rochester, New York 14650 (US)
(72) Inventor: FRIOUR, Gérard Amédé Désiré, Kodak Industrie, F-71102 Châlon sur Saône Cedex (FR); PONCELET, Olivier Jean Christian,Kodak Industrie, F-71102 Châlon sur Saône Cedex (FR)
(74) Representative: Weber, Etienne Nicolas
(86) International application number: PCT/EP2004/007184
(87) International publication number: WO 2005/011994

(56) References cited:
- EP-A- 0 803 374
- EP-A- 0 903 246
- PATENT ABSTRACTS OF JAPAN vol. 2000, no. 02, 29 February 2000 (2000-02-29) -& JP 11 322325 A (OJI PAPER CO LTD), 24 November 1999 (1999-11-24)

## Description

### FIELD OF THE INVENTION

The present invention relates to an inkjet recording element.

### BACKGROUND OF THE INVENTION

Digital photography has been growing fast for several years and the general public now has access to efficient and reasonably priced digital cameras. Therefore people are seeking to be able to produce photographic prints from a simple computer and its printer, with the best possible quality.

Many printers, especially those linked to personal office automation, use the inkjet printing technique. There are two major families of inkjet printing techniques: continuous jet and drop-on-demand.

Continuous jet is the simpler system. Pressurized ink (3.10⁵ Pa) is forced to go through one or more nozzles so that the ink is transformed into a flow of droplets. In order to obtain the most regular possible sizes and spaces between drops, regular pressure pulses are sent using for example a piezoelectric crystal in contact with the ink with high frequency (up to 1 MHz) alternating current (AC) power supply. So that a message can be printed using a single nozzle, every drop must be individually controlled and directed. Electrostatic energy is used for this: an electrode is placed around the inkjet at the place where drops form. The jet is charged by induction and every drop henceforth carries a charge whose value depends on the applied voltage. The drops then pass between two deflecting plates charged with the opposite sign and then follow a given direction, the amplitude of the movement being proportional to the charge carried by each of them. To prevent other drops from reaching the paper, they are left uncharged: so, instead of going to the support they continue their path without being deflected and go directly into a container. The ink is then filtered and can be reused.

The other category of inkjet printer is drop-on-demand (DOD). This constitutes the base of inkjet printers used in office automation. With this method, the pressure in the ink cartridge is not maintained constant but is applied when a character has to be formed. In one widespread system there is a row of 12 open nozzles, each of them being activated with a piezoelectric crystal. The ink contained in the head is given a pulse: the piezo element contracts with an electric voltage, which causes a decrease of volume, leading to the expulsion of the drop by the nozzle. When the element resumes its initial shape, it pumps in the reservoir the ink necessary for new printings. The row of nozzles is thus used to generate a column matrix, so that no deflection of the drop is necessary. One variation of this system consists in replacing the piezoelectric crystals by small heating elements behind each nozzle. The drops are ejected following the forming of bubbles of solvent vapor. The volume increase enables the expulsion of the drop. Finally, there is a pulsed inkjet system in which the ink is solid at ambient temperature. The print head thus has to be heated so that the ink liquefies and can print. This enables rapid drying on a wider range of products than conventional systems.

There now exist new "inkjet" printers capable of producing photographic images of excellent quality. However, they cannot supply good proofs if inferior quality printing paper is used. The choice of printing paper is fundamental for the quality of obtained image. The printing paper must combine the following properties: high quality printed image, rapid drying after printing, good dye keeping in time, smooth appearance, and high gloss.

In general, the printing paper comprises a support coated with one or more layers according to the properties required. It is possible, for example, to apply on a support a primary attachment layer, an absorbent layer, an ink-fixing layer and a protective layer or surface layer to provide the glossiness of the recording element. The absorbent layer absorbs the liquid part of the water-based ink composition after creation of the image. Elimination of the liquid reduces the risk of ink migration to the surface. The ink fixing layer prevents any ink loss into the fibers of the paper base to obtain good color saturation while preventing excess ink that would encourage the increase in size of the printing dots and reduce the image quality. The absorbent layer and fixing layer can also constitute a single ink-receiving layer ensuring both functions. The protective layer is designed to ensure protection against fingerprints and the pressure marks of the printer feed rollers. The ink-receiving layer usually comprises a binder, a receiving agent and various additives. The purpose of the receiving agent is to fix the dyes in the printing paper. The best-known inorganic receivers are colloidal silica or boehmite. For example, the European Patent Applications EP-A-976,571 and
EP-A-1,162,076 describe materials for inkjet printing in which the ink-receiving layer contains as inorganic receivers Ludox™ CL (colloidal silica) marketed by Grace Corporation or Dispal™ (colloidal boehmite) marketed by Sasol. However, printing paper comprising an ink-receiving layer containing such inorganic receivers can have poor image stability in time, which is demonstrated by a loss of color density. Another conventional inkjet recording element is known from EP-A-0803374.

To meet the new requirements of the market in terms of photographic quality, printing speed and color stability, it is necessary to offer a new inkjet recording element having the properties as defined above, more particularly good dye keeping properties in time as well as a high gloss.

### SUMMARY OF THE INVENTION

The new inkjet recording element according to the present invention comprises a support and at least one ink-receiving layer comprising at least one hydrosoluble binder and at least one aluminosilicate polymer obtainable by a preparation method that comprises the following steps:
a) treating a mixed aluminum and silicon alkoxide only comprising hydrolyzable functions, or a mixed aluminum and silicon precursor resulting from the hydrolysis of a mixture of aluminum compounds and silicon compounds only comprising hydrolyzable functions, with an aqueous alkali, in the presence of silanol groups, the aluminum concentration being maintained at less than 0.3 mol/l, the AI/Si molar ratio being maintained between 1 and 3.6 and the alkali/Al molar ratio being maintained between 2.3 and 3;
b) stirring the mixture resulting from step a) at ambient temperature in the presence of silanol groups long enough to form the aluminosilicate polymer; and
c) eliminating the byproducts formed during steps a) and b) from the reaction medium,
wherein the ink-receiving layer also comprises inorganic particles. These inorganic particles are based on metal oxide or metal hydroxide. They can be based on alumina, silica, titanium, zirconium, or their mixtures, such as the boehmites, fumed aluminas, colloidal silicas, fumed silicas, calcium silicates, magnesium silicates, zeolites, kaolin, bentonite, silicon dioxide, and titanium dioxide. The inorganic particles used can also be based on calcium carbonates, or barium carbonates.

Throughout the present description, the expression "hydrolyzable function" means a substituent eliminated by hydrolysis during the process and in particular at the time of treatment with the aqueous alkali. In the following, the expression "unmodified mixed aluminum and silicon alkoxide" or "unmodified mixed aluminum and silicon precursor" means respectively a mixed aluminum and silicon alkoxide only having hydrolyzable functions, or a mixed aluminum and silicon precursor resulting from the hydrolysis of a mixture of aluminum compounds and silicon compounds only having hydrolyzable functions. More generally, an "unmodified" compound is a compound that only comprises hydrolyzable substituents.

The addition of inorganic particles into the element according to the invention enables the quantity of aluminosilicate polymer used in the receiving layer to be reduced, while obtaining an element having improved dye keeping in time as well as a good gloss compared with the inkjet recording elements available on the market.

### BRIEF DESCRIPTION OF THE DRAWINGS

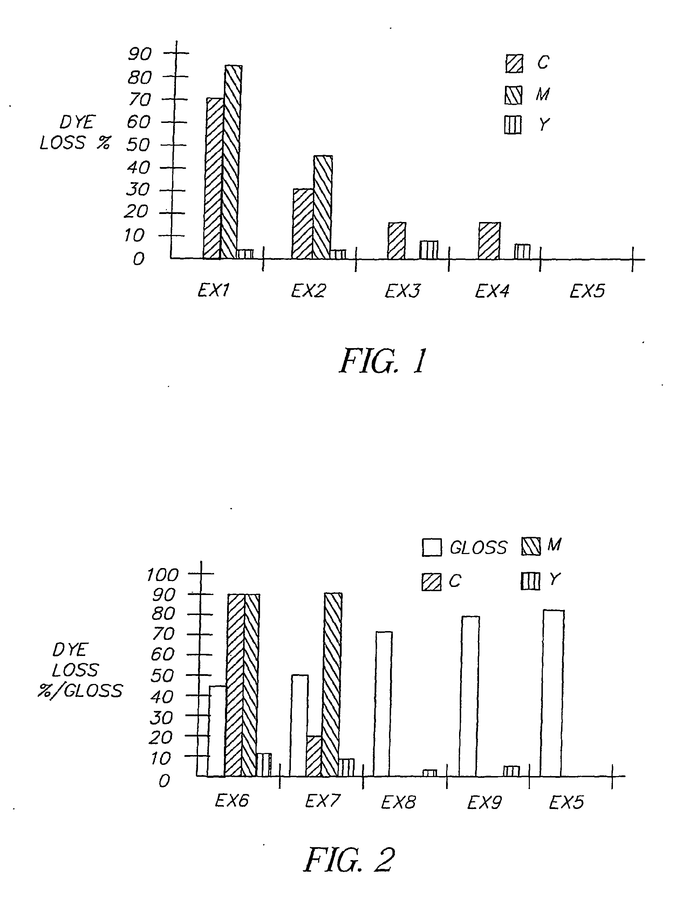

Figures 1 to 3 represent the percentage of color density loss and gloss for various comparative recording elements and according to the present invention, when exposed to ozone.

### DETAILED DESCRIPTION OF THE INVENTION

The inkjet recording element according to the present invention comprises firstly a support. This support is selected according to the desired use. It can be a transparent or opaque thermoplastic film, in particular a polyester base film; cellulose derivatives, such as cellulose ester, cellulose triacetate, cellulose diacetate; polyacrylates; polyimides; polyamides; polycarbonates; polystyrenes; polyolefines; polysulfones; polyetherimides; vinyl polymers such as polyvinyl chloride; and their mixtures. The support used in the invention can also be paper, both sides of which may be covered with a polyethylene layer. When the support comprising the paper pulp is coated on both sides with polyethylene, it is called Resin Coated Paper (RC Paper) and is marketed under various brand names. This type of support is especially preferred to constitute an inkjet recording element. The side of the support that is used can be coated with a very thin layer of gelatin or another composition to ensure the adhesion of the first layer on the support. To improve the adhesion of the ink-receiving layer on the support, the support surface can also have been subjected to a preliminary treatment by Corona discharge before applying the ink-receiving layer.

The inkjet recording element according to the invention then comprises at least one ink-receiving layer comprising at least one hydrosoluble binder. Said hydrosoluble binder can be a hydrophilic polymer such as polyvinyl alcohol, poly(vinyl pyrrolidone), gelatin, cellulose ethers, poly(oxazolines), poly(vinylacetamides), poly(vinyl acetate/vinyl alcohol) partially hydrolyzed, poly(acrylic acid), poly(acrylamide), sulfonated or phosphated polyesters and polystyrenes, casein, zein, albumin, chitin, dextran, pectin, derivatives of collagen, agar-agar, guar, carragheenane, tragacanth, xanthan and others. Preferably, one uses gelatin or polyvinyl alcohol. The gelatin is that conventionally used in the photographic field. Such a gelatin is described in Research Disclosure, September 1994, No. 36544, part IIA. *Research Disclosure* is a publication of Kenneth Mason Publications Ltd., Dudley House, 12 North Street, Emsworth, Hampshire PO10 7DQ, United Kingdom. The gelatin can be obtained from SKW and the polyvinyl alcohol from Nippon Gohsei, or Air Product with the name Airvol® 130.

The ink-receiving layer comprises, as receiving agent, at least one aluminosilicate polymer obtainable by a preparation method comprising the following steps:
a) treating a mixed aluminum and silicon alkoxide only comprising hydrolyzable functions, or a mixed aluminum and silicon precursor resulting from the hydrolysis of a mixture of aluminum compounds and silicon compounds only comprising hydrolyzable functions, with an aqueous alkali, in the presence of silanol groups, the aluminum concentration being maintained at less than 0.3 mol/l, the Al/Si molar ratio being maintained between 1 and 3.6 and the alkali/Al molar ratio being maintained between 2.3 and 3;
b) stirring the mixture resulting from step a) at ambient temperature in the presence of silanol groups long enough to form the aluminosilicate polymer; and
c) eliminating the byproducts formed during steps a) and b) from the reaction medium.
This aluminosilicate polymer, described in French Patent Application FR 02/9085, enables inkjet recording element to be produced having very good gloss and image stability properties.

According to one embodiment, the unmodified mixed aluminum and silicon precursor can be formed in situ by mixing in aqueous medium (i) one compound selected from the group consisting of aluminum salts, aluminum alkoxides and aluminum halogenoalkoxides and (ii) at least one compound selected from the group consisting of unmodified silicon alkoxides and chloroalkoxides. The alkoxide radical of the unmodified aluminum compound or silicon compound preferably contains 1 to 5 carbon atoms, such as methoxide, ethoxide, n-propoxide, or i-propoxide.

Preferably, an aluminum salt, such as a halide (e.g. chloride or bromide), a perhalogenate, a sulfate, a nitrate, a phosphate or a carboxylate, and at least one unmodified silicon alkoxide, such as tetramethyl or tetraethyl orthosilicate is used.

A single unmodified silicon alkoxide or a mixture of unmodified silicon alkoxides, or a single unmodified silicon chloroalkoxide or a mixture of unmodified silicon chloroalkoxides, or a mixture of unmodified silicon alkoxides and chloroalkoxides can be used.

Preferably, an aluminum halide, such as chloride, and an unmodified silicon alkoxide is used. In practice, the mixture is made at ambient temperature between 15°C and 35°C, preferably between 20°C and 25°C, by adding the silicon alkoxide, pure or diluted in a co-solvent such as an alcohol, to the aluminum salt in aqueous solution, with stirring, until a clear homogeneous mixture is obtained. An unmodified mixed aluminum and silicon precursor is thus obtained. The stirring time varies from 10 to 180 minutes, and is preferably 120 minutes.

According to step a) of the method for preparing the aluminosilicate polymer useful in the invention, the precursor or an unmodified mixed aluminum and silicon alkoxide is then put in contact with an aqueous alkali, the aluminum concentration being maintained at less than 0.3 mol/l, the Al/Si molar ratio being maintained between 1 and 3.6, and the alkali/Al molar ratio being maintained between 2.3 and 3. Advantageously, the aluminum concentration is between 1.5 x 10⁻² and 0.3 mol/l and even more preferably between 4.4 x 10⁻² and 0.3 mol/l. Preferably, the Al/Si molar ratio is between 1 and 2.

Preferably, an aqueous solution of sodium, potassium or lithium hydroxide, with a concentration between 0.5 M and 3 M, and preferably 3 M is used. The alkali can also be in the form of an hydroalcoholic solution.

The alkali is added to the precursor or to the unmodified mixed aluminum and silicon alkoxide at a rate preferably between 50 and 650 mmoles/hour.

The alkali in step a) is added in the presence of silanol groups. These groups can be supplied by glass or silica (glass wool) particles or beads, which have superficial hydroxy groups. When the volume of liquid to be treated is large, it may be desirable to increase the quantity of beads. The diameter of the beads can be between 0.2 and 5 mm and preferably between 1 and 3 mm. To simplify the implementation of the method for preparing the aluminosilicate polymer useful in the present invention, the preparation of the mixed aluminum and silicon precursor can also be performed in the presence of silanol groups, for example by circulating the mixture in a bed of glass beads.

After the addition of the alkali, step b) of the method for preparing the aluminosilicate polymer useful in the present invention consists in stirring the mixture resulting from step a) at ambient temperature in the presence of silanol groups long enough to form the said aluminosilicate polymer.

Then, step c) of the method for preparing the aluminosilicate polymer useful in the present invention consists in eliminating from the reaction medium the byproducts formed during steps a) and b), such as the residual ions coming essentially from the alkali used in step a). The residual ions can be eliminated by washing, by successive sedimentation or by diafiltration. The aluminosilicate polymer material resulting from step c) can then be concentrated by centrifugation or nanofiltration.

In a first embodiment of the method for preparing the aluminosilicate polymer useful in the present invention, during step a) a quantity of alkali is added in order to obtain an alkali/Al molar ratio of about 2.3. In this case the pH is maintained between 4 and 5, and preferably between 4.2 and 4.3. Then step b) as described above is applied. The aluminosilicate polymer useful in the present invention is thus obtained in a dispersion form. Step c) to eliminate the residual ions can then be performed by diafiltration, followed by nanofiltration concentration.

In a second embodiment of the method for preparing the aluminosilicate polymer useful in the present invention, during step a) a quantity of alkali is added in order to obtain an alkali/Al molar ratio of about 3. Then step b) as described above is applied. The aluminosilicate polymer useful in the present invention is thus obtained in a suspension form. Step c) to eliminate the residual ions can then be performed by diafiltration, followed by nanofiltration concentration, the aluminosilicate polymer having been previously redispersed by adding acid, such as hydrochloric or acetic acid or a mixture thereof.

In a third embodiment, the method for preparing the aluminosilicate polymer useful in the present invention comprises an additional step d), after step b) and before step c). Said step d) consists in adding in a few minutes an additional quantity of aqueous alkali to reach an alkali/A1 molar ratio of 3 if this ratio had not already been reached during step a). The aluminosilicate polymer useful in the present invention is thus obtained in a suspension form. Step c) to eliminate the residual ions can then be performed by diafiltration, followed by nanofiltration concentration, the aluminosilicate polymer having been previously redispersed by adding hydrochloric acid. Step c) can also be performed by washing with osmosed water by successive sedimentations, followed by centrifugation concentration.

The aluminosilicate polymer useful in the present invention resulting from step c) followed by a concentration has physical gel form. The Al/Si molar ratio is between 1 and 3.6. Subsequent lyophilization enables the aluminosilicate polymer useful in the present invention to be obtained as a powder. Such an aluminosilicate polymer can be characterized in that its Raman spectrum comprises in spectral region 200-600 cm⁻¹ a wide band at 250 ± 5 cm⁻¹, a wide intense band at 359 ± 4 cm⁻¹, a shoulder at 407 ± 7 cm⁻¹, and a wide band at 501 ± 2 cm⁻¹, the Raman spectrum being produced for the aluminosilicate polymer resulting from step b) and before step c) and lyophilized.

According to the present invention, the ink-receiving layer also comprises inorganic particles. In one embodiment, said inorganic particles are based on metal oxide or metal hydroxide. Preferably, the inorganic particles are based on alumina, silica, titanium, zirconium, or their mixtures. Preferably, the inorganic particles are selected from among the group consisting of the boehmites, fumed aluminas, colloidal silicas, fumed silicas, calcium silicates, magnesium silicates, zeolites, kaolin, bentonite, silicon dioxide, and titanium dioxide. According to another embodiment, the inorganic particles are based on calcium carbonates, or barium carbonates.

Those skilled in the art know that such inorganic particles, used as a receiving agent in ink-receiving layers, do not enable the required image stability nor gloss to be obtained for inkjet recording elements.

The quantity of inorganic particles is selected so that the addition the said inorganic particles in the ink-receiving layer enables the quantity of aluminosilicate polymer used to be reduced, while keeping the image stability and gloss properties obtained with this aluminosilicate polymer when it is used alone. The quantity of aluminosilicate polymer useful in the present invention, in the dry state, is between 5 and 80 percent by weight compared with the total dry inorganic mass, represented by the dry weight of the aluminosilicate polymer useful in the present invention and the inorganic particles. Preferably, the quantity of aluminosilicate polymer useful in the present invention in the dry state is between 5 and 50 percent by weight compared with the dry inorganics total weight. In a more preferred way, the quantity of aluminosilicate polymer useful in the present invention in the dry state is between 5 and 20 percent by weight compared with the dry inorganics total weight.

In the ink-receiving layer, the inorganics total dry weight (aluminosilicate polymer and inorganic particles) is between 5 and 95 percent of the total weight of the dry state ink-receiving layer. Preferably, the total dry inorganic weight is between 85 and 95 percent of the total weight of the dry receiving layer.

The present invention also relates to the composition intended to be coated on the support to constitute the ink-receiving layer of the inkjet recording element described above. To produce this composition, the hydrosoluble binder is diluted in water to adjust its viscosity and facilitate its coating. Preferably, one uses the aluminosilicate polymer useful in the present invention and the inorganic particles in the form of an aqueous solution. Preferably, the aluminosilicate polymer useful in the present invention and the inorganic particles are first mixed together and then the hydrosoluble binder is added. The composition then has the form of an aqueous solution or a dispersion containing all the necessary components.

The composition can also comprise a surfactant to improve its coating properties. The composition can be coated on the support according to any appropriate coating method, such as blade, knife or curtain coating. The composition is applied with a thickness between approximately 100 µm and 200 µm in the wet state. The composition forming the ink-receiving layer can be applied to both sides of the support. It is also possible to provide an antistatic or anti-winding layer on the back of the support coated with the ink-receiving layer.

The inkjet recording element according to the invention can comprise, besides the ink-receiving layer described above, other layers having another function, arranged above or below said ink-receiving layer. The ink-receiving layer as well as the other layers can comprise all the other additives known to those skilled in the art to improve the properties of the resulting image, such as UV ray absorbers, optical brightening agents, antioxidants, plasticizers, etc.

The ink-receiving layer useful in the present invention has a thickness generally between 5 µm and 50 µm in the dry state. The inkjet recording element comprising such an ink-receiving layer has improved dye keeping properties in time as well as a good gloss. It can be used for any type of inkjet printer as well as for all the inks developed for this technology.

The following examples illustrate the present invention without however limiting the scope.

### 1) Preparation of the aluminosilicate polymer useful in the present invention

4.53 moles AlCl₃, 6H₂O, then 2.52 moles tetraethyl orthosilicate were added to 1001 osmosed water. This mixture was stirred and circulated simultaneously through a bed formed of 1-kg glass beads 2-mm diameter using a pump with 8-1/min output. The operation to prepare the unmodified mixed aluminum and silicon precursor took 120 minutes. Then, according to step a) of the method for preparing the aluminosilicate polymer used in the present invention, 10.5 moles NaOH 3M were added to the precursor in two hours. The reaction medium clouded. According to step b) of the preparation method, the mixture was stirred for 18 hours. The medium became clear. The circulation was stopped in the glass bead bed. Then, according to step d) of the preparation method, 3.09 moles NaOH 3M were added in ten minutes. Aluminum concentration was 4.4 x 10⁻² mol/l, Al/Si molar ratio 1.8 and alkali/A1 ratio 3. The aluminosilicate polymer useful in the present invention was thus obtained as a suspension. Step c) of the preparation method consisted in leaving the polymer suspension to settle for 24 hours, then in discarding the supernatant to recover the sediment. Then 166 g HCl37 percent, previously diluted 10 times, were added to the sediment to obtain a dispersion of the aluminosilicate polymer. The dispersion was then diafiltrated using a Filmtec NF 2540 nanofiltration membrane (surface area 6 m²) to eliminate the sodium salts to achieve an Al/Na ratio greater than 100. Then the retentate resulting from the diafiltration by nanofiltration was concentrated to obtain a gel with about 20 percent by weight of aluminosilicate polymer used in the present invention. The resulting gel was lyophilized (20 mT, -50°C) to obtain a solid of constant mass. The aluminosilicate polymer was in powder form.

### 2) Preparation of coating compositions constituting an ink-receiving layer coated on a support

As hydrosoluble binder, polyvinyl alcohol was used (Gohsenol™ GH23 marketed by Nippon Gohsei) diluted to 9 percent in osmosis water.

The powder of the aluminosilicate polymer prepared according to Example 1 was used to prepare a solution of aluminosilicate polymer useful in the present invention at 16.66 percent in de-ionized water.

The inorganic particles used are given below in Table I:

**Table I**

| **Inorganic particles** | **Brand** | **Supplier** |
|---|---|---|
| Fumed alumina | CAB-O-SPERSE® PG003 | Cabot Corporation |
| Boehmite | Disperal™ HP 14/2 | Sasol Corporation |
| Colloidal silica | Ludox™ PGE | Grace Corporation |

The inorganic particles in the form of powder were first put into suspension according to the supplier's procedure.

All the compositions resulted from mixing:
13.6 g dry inorganic matter (aluminosilicate polymer and inorganic particles)
18.1 g polyvinyl alcohol in solution at 9 percent
Water to 100 g

First various mixtures were made of the aluminosilicate polymer and inorganic particles comprising 0 to 100 percent of aluminosilicate polymer by weight compared with the total dry inorganic weight, in a glass flask including five 10-mm diameter glass beads for 50 g of mixture. The mixture was stirred for two hours by a roller stirrer. Then the polyvinyl alcohol was added and stirred overnight by a roller stirrer.

### 3) Preparation of inkjet recording elements

To do this, a Resin Coated Paper type support was placed on a coating machine, first coated with a very thin gelatin layer, and held on the coating machine by vacuum. This support was coated with a composition as prepared according to Paragraph 2 using a 125-µm thick filmograph. Then, it was left to dry in the atmosphere (21 °C) to obtain a dry layer about 10 g/m².

The resulting recording elements correspond to the examples given in Table II below by specifying the inorganic particles added to the aluminosilicate polymer used in the ink-receiving layer, and the aluminosilicate polymer/inorganic particles weight ratio:

**Table II**

| **Recording element** | **Inorganic particles added to the ink-receiving layer** | **Aluminosilicate/ inorganic particle weight ratio** |
|---|---|---|
| Ex 1 (comp.) | Fumed alumina CAB-O-SPERSE® PG003 | 0/100 |
| Ex 2 (inv.) | Fumed alumina CAB-O-SPERSE® PG003 | 20/80 |
| Ex 3 (inv.) | Fumed alumina CAB-O-SPERSE® PG003 | 50/50 |
| Ex 4 (inv.) | Fumed alumina CAB-O-SPERSE® PG003 | 80/20 |
| Ex 5 (comp.) | - | 100/0 |
| Ex 6 (comp.) | Boehmite (Disperal™ HP 14/2) | 0/100 |
| Ex 7 (inv.) | Boehmite (Disperal™ HP 14/2) | 20/80 |
| Ex 8 (inv.) | Boehmite (Disperal™ HP 14/2) | 50/50 |
| Ex 9 (inv.) | Boehmite (Disperal™ HP 14/2) | 80/20 |
| Ex 10 (comp.) | Colloidal silica Ludox™ PGE | 0/100 |
| Ex 11 (inv.) | Colloidal silica Ludox™ PGE | 5/95 |
| Ex 12 (inv.) | Colloidal silica Ludox™ PGE | 12.5/87.5 |
| Ex 13 (inv.) | Colloidal silica Ludox™ PGE | 20/80 |

### 4) Evaluation of dye keeping properties in time and evaluation of gloss

To evaluate the dye keeping properties in time, a dye fading color test by exposure to ozone was performed for each resulting recording element. To do this, targets, comprising three colors (yellow, cyan and magenta) were printed on each recording element using a KODAK PPM 200 printer and related ink. The targets were analyzed using a GretagMacbeth™ Spectrolino spectrophotometer that measured the intensity of the various colors. Then the recording elements were placed to the dark in a room with controlled ozone atmosphere (60 ppb) for three weeks. Each week, any degradation of the color density was monitored using the spectrophotometer.

The gloss was measured for various resulting recording elements using a Picogloss 560 apparatus (60° geometry) marketed by Erichsen.

Figure 1 represents the percentage of density loss observed for the original density 0.5 for the three colors of the targets after three weeks for examples 1 to 5. The letters C, M and Y represent the colors cyan, magenta and yellow respectively.

It may be seen that the inkjet recording elements according to the invention (Ex. 2 to 4) have dye keeping properties in time superior to that of elements only containing inorganic particles. In particular, the color magenta is much more degraded for the comparative example 1 than for recording elements according to the invention.

Figure 2 represents the gloss as well as the percentage of density loss observed for the original density 0.5 for the three colors of the targets after three weeks for examples 5, 6 to 9. Here again, Figure 2 clearly shows that the recording elements according to the invention (Ex. 7 to 9) have very good dye keeping properties compared with the element only containing inorganic particles (Ex. 6) and are almost stable for all the colors. The gloss of the recording elements according to the invention is also superior to that of the recording element only containing inorganic particles. In particular, the inkjet recording elements according to Examples 8 and 9, while they contain a quantity of aluminosilicate polymer less than the element of Example 5, enable a gloss and color stability to be obtained similar to those of the element only containing the aluminosilicate polymer. The addition of boehmite enables the quantity of aluminosilicate polymer useful in the invention to be reduced while keeping the image stability and gloss properties obtained by this aluminosilicate polymer when used alone.

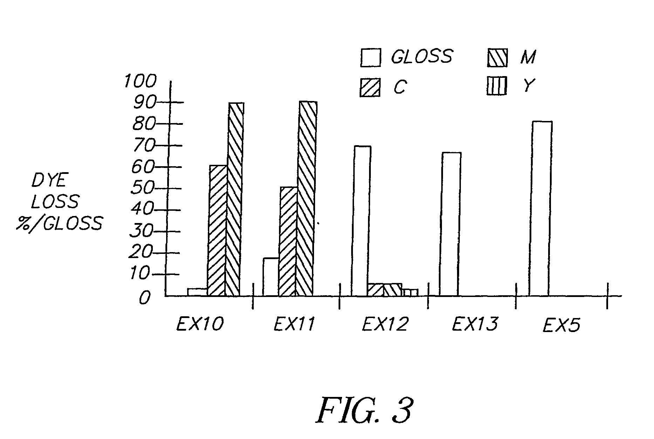

Figure 3 represents the gloss as well as the percentage of density loss observed for the original density 0.5 for the three colors of the target after three weeks for examples 5, 10 to 13. Here again, Figure 3 clearly shows that the inkjet recording elements according to the invention (Ex. 11 to 13) have better dye keeping properties than the recording element only containing inorganic particles (Ex. 10). The gloss of the recording elements according to the invention is also superior to that of the recording element only containing inorganic particles. In particular, the recording elements according to Examples 12 and 13, while they contain a quantity of aluminosilicate polymer less than the recording element of Example 5, enable a gloss and color stability to be obtained similar to those of the element only containing the aluminosilicate polymer. The addition of colloidal silica enables the quantity of aluminosilicate polymer useful in the invention to be reduced while keeping the image stability and gloss properties obtained by this aluminosilicate polymer when used alone.

## Claims

1. An inkjet recording element comprising a support and at least one ink-receiving layer comprising at least one hydrosoluble binder and at least one aluminosilicate polymer obtainable by a preparation method that comprises the following steps:
a) treating a mixed aluminum and silicon alkoxide only comprising hydrolyzable functions, or a mixed aluminum and silicon precursor resulting from the hydrolysis of a mixture of aluminum compounds and silicon compounds only comprising hydrolyzable functions, with an aqueous alkali, in the presence of silanol groups, the aluminum concentration being maintained at less than 0.3 mol/l, the Al/Si molar ratio being maintained between 1 and 3.6 and the alkali/Al molar ratio being maintained between 2.3 and 3;
b) stirring the mixture resulting from step a) at ambient temperature in the presence of silanol groups long enough to form the aluminosilicate polymer; and
c) eliminating the byproducts formed during steps a) and b) from the reaction medium,
wherein the ink-receiving layer also comprises inorganic particles.

2. The recording element according to Claim 1, wherein the inorganic particles are based on metal oxide or metal hydroxide.

3. The recording element according to Claim 2, wherein the inorganic particles are based on alumina, silica, titanium, zirconium, or their mixtures.

4. The recording element according to Claim 3, wherein the inorganic particles are selected from among the group consisting of the boehmites, fumed aluminas, colloidal silicas, fumed silicas, calcium silicates, magnesium silicates, zeolites, kaolin, bentonite, silicon dioxide, and titanium dioxide.

5. The recording element according to Claim 1, wherein the inorganic particles are based on calcium carbonates or barium carbonates.

6. The recording element according to any one of the previous claims, wherein the ink-receiving layer comprises a quantity of aluminosilicate polymer in the dry state between 5 and 20 percent by weight compared with the total dry inorganic weight.

7. The recording element according to any one of the previous claims, wherein, in the ink-receiving layer, the total dry inorganic weight is between 5 and 95 percent of the total dry receiving layer weight.

8. The recording element according to Claim 1, wherein the alkali of step a) to prepare the aluminosilicate polymer is selected from the group consisting of sodium, potassium, and lithium hydroxide.

9. The recording element according to Claim 1, wherein the aluminum concentration used to prepare the aluminosilicate polymer is maintained between 1.5 x 10⁻² and 0.3 mol/l.

10. The recording element according to Claim 1, wherein alkali/A1 molar ratio to prepare the aluminosilicate polymer is about 3.

11. The recording element according to Claim 1, wherein the mixed aluminum and silicon precursor resulting from hydrolysis of a mixture of aluminum compounds and silicon compounds only having hydrolyzable functions is a product resulting from the mixture in an aqueous medium (i) of a compound selected from the group consisting of aluminum salts, aluminum alkoxides and aluminum halogenoalkoxides and (ii) at least one compound selected from the group consisting of silicon alkoxides and chloroalkoxides only having hydrolyzable functions.

12. The recording element according to Claim 11, wherein said mixed aluminum and silicon precursor is the product resulting from the mixture (i) of an aluminum halide and (ii) a silicon alkoxide only having hydrolyzable functions.

13. The recording element according to Claim 12, wherein silicon alkoxide only having hydrolyzable functions is tetramethyl orthosilicate or tetraethyl orthosilicate.

14. The recording element according to Claim 1, wherein the hydrophilic binder is gelatin or polyvinyl alcohol.

## Patentansprüche

1. Tintenstrahl-Aufzeichnungselement mit einem Träger und mindestens einer Tintenempfangsschicht mit mindestens einem hydrolöslichen Bindemittel und mindestens einem Aluminosilicatpolymer, das nach einem Herstellungsverfahren erhältlich ist, das die folgenden Stufen umfasst:
a) Behandeln eines gemischten Aluminium- und Siliciumalkoxides, das lediglich hydrolysierbare Funktionen aufweist, oder eines gemischten Aluminium- und Siliciumvorläufers, der bei der Hydrolyse einer Mischung von Aluminiumverbindungen und Siliciumverbindungen anfällt, die lediglich hydrolysierbare Funktionen aufweisen, mit einem wässrigen Alkali in Gegenwart von Silanolgruppen, wobei die Aluminiumkonzentration bei weniger als 0,3 Molen/l gehalten wird, und wobei das Molverhältnis von Al/Si zwischen 1 und 3,6 und das Molverhältnis des Alkalis/A1 zwischen 2,3 und 3 gehalten wird;
b) Verrühren der sich aus Schritt a) ergebenden Mischung bei Umgebungstemperatur in Gegenwart von Silanolgruppen so lange, bis das Aluminosilicatpolymer entsteht; und
c) Eliminieren der Nebenprodukte, die in Schritt a) und b) aus dem Reaktionsmedium anfallen;
worin die Tintenempfangsschicht zudem anorganische Teilchen umfasst.

2. Aufzeichnungselement nach Anspruch 1, worin die anorganischen Teilchen auf Metalloxid oder Metallhydroxid basieren.

3. Aufzeichnungselement nach Anspruch 2, worin die anorganischen Teilchen auf Aluminiumoxid, Siliciumdioxid, Titan, Zirkon oder Mischungen daraus basieren.

4. Aufzeichnungselement nach Anspruch 3, worin die anorganischen Teilchen ausgewählt sind aus der Gruppe, die aus Boehmiten, hochdispersen Aluminiumoxiden, kolloidalen Siliciumdioxiden, hochdispersen Siliciumdioxiden, Calciumsilicaten, Magnesiumsilicaten, Zeoliten, Kaolin, Bentonit, Siliciumdioxid und Titandioxid besteht.

5. Aufzeichnungselement nach Anspruch 1, worin die anorganischen Teilchen auf Calciumcarbonaten oder Bariumcarbonaten basieren.

6. Aufzeichnungselement nach einem der vorausgehenden Ansprüche, worin die Tintenempfangsschicht eine Menge an Aluminosilicatpolymer im trockenen Zustand zwischen 5 und 20 Gew.-% im Vergleich zum gesamten Trockengewicht der anorganischen Teilchen umfasst.

7. Aufzeichnungselement nach einem der vorausgehenden Ansprüche, worin in der Tintenempfangsschicht das gesamte Trockengewicht der anorganischen Teilchen zwischen 5 und 95% des Gesamtgewichts der trockenen Empfangsschicht beträgt.

8. Aufzeichnungselement nach Anspruch 1, worin das Alkali aus Schritt a) zur Herstellung des Aluminosilicatpolymers aus der Gruppe ausgewählt wird, die aus Natrium-, Kalium-, oder Lithiumhydroxid besteht.

9. Aufzeichnungselement nach Anspruch 1, worin die Aluminiumkonzentration, die verwendet wird, um das Aluminosilicatpolymer herzustellen, zwischen 1,5 x 10⁻² und 0,3 Molen/l gehalten wird.

10. Aufzeichnungselement nach Anspruch 1, worin das Molverhältnis von Alkali/Al zur Herstellung des Aluminosilicatpolymers bei ca. 3 liegt.

11. Aufzeichnungselement nach Anspruch 1, worin der gemischte Aluminium- und Siliciumvorläufer, der bei der Hydrolyse einer Mischung von Aluminiumverbindungen und Siliciumverbindungen mit lediglich hydrolysierbaren Funktionen anfällt, ein Produkt ist, das aus der Mischung (i) einer Verbindung, ausgewählt aus der aus Aluminiumsalzen, Aluminiumalkoxiden und Aluminiumhalogenalkoxiden bestehenden Gruppe und (ii) mindestens einer Verbindung, ausgewählt aus der aus Siliciumalkoxiden und Chloralkoxiden mit lediglich hydrolysierbaren Funktionen bestehenden Gruppe in einem wässrigen Medium resultiert.

12. Aufzeichnungselement nach Anspruch 11, worin der gemischte Aluminium- und Siliciumvorläufer das Produkt ist, das aus der Mischung (i) eines Duminumhalogenids und (ii) eines Siliciumalkoxids mit lediglich hydrolysierbaren Funktionen resultiert.

13. Aufzeichnungselement nach Anspruch 12, worin das Siliciumalkoxid mit lediglich hydrolysierbaren Funktionen Tetramethylorthosilicat oder Tetraethylorthosilicat ist.

14. Aufzeichnungselement nach Anspruch 1, worin das hydrophile Bindemittel Gelatine oder Polyvinylalkohol ist.

## Revendications

1. Elément d'enregistrement par jet d'encre, comprenant un support et au moins une couche réceptrice d'encre comprenant au moins un liant hydrosoluble et au moins un polymère d'aluminosilicate susceptible d'être obtenu selon un procédé de préparation qui comprend les étapes suivantes :
a) le traitement d'un alcoxyde mixte d'aluminium et de silicium ne comprenant que des fonctions hydrolysables, ou d'un précurseur mixte d'aluminium et de silicium obtenu par hydrolyse d'un mélange de composés d'aluminium et de composés de silicium ne comprenant que des fonctions hydrolysables, avec un alcali aqueux, en présence de groupes silanol, la concentration d'aluminium étant maintenue inférieure à 0,3 mole/l, le rapport molaire Al/Si étant maintenu entre 1 et 3,6 et le rapport molaire alcali/A1 étant maintenu entre 2,3 et 3;
b) l'agitation du mélange obtenu à l'étape a) à température ambiante en présence de groupes silanol pendant une durée suffisante pour former le polymère d'aluminosilicate ; et
c) l'élimination du milieu réactionnel des sous-produits formés au cours des étapes a) et b),
dans lequel la couche réceptrice d'encre comprend également des particules inorganiques.

2. Elément d'enregistrement selon la revendication 1, dans lequel les particules inorganiques sont à base d'oxyde métallique ou d'hydroxyde métallique.

3. Elément d'enregistrement selon la revendication 2, dans lequel les particules inorganiques sont à base d'alumine, de silice, de titanium, de zirconium ou de mélanges de ceux-ci.

4. Elément d'enregistrement selon la revendication 3, dans lequel les particules inorganiques sont choisies dans le groupe composé par les boehmites, les alumines pyrogénées, les silices colloïdales, les silices pyrogénées, les silicates de calcium, les silicates de magnésium, les zéolithes, le kaolin, la bentonite, la silice et le dioxyde de titane.

5. Elément d'enregistrement selon la revendication 1, dans lequel les particules inorganiques sont à base de carbonates de calcium ou de carbonates de baryum.

6. Elément d'enregistrement selon l'une quelconque des revendications précédentes, dans lequel la couche réceptrice d'encre comprend une quantité de polymère d'aluminosilicate à l'état sec allant de 5 à 20 pour cent en poids par rapport au poids total inorganique à sec.

7. Elément d'enregistrement selon l'une quelconque des revendications précédentes, dans lequel, dans la couche réceptrice d'encre, le poids total inorganique à sec est compris entre 5 et 95 pour cent du poids total à sec de la couche réceptrice d'encre.

8. Elément d'enregistrement selon la revendication 1, dans lequel l'alcali de l'étape a) utilisé pour préparer le polymère d'aluminosilicate est choisi dans le groupe comprenant de l'hydroxyde de sodium, de potassium et de lithium.

9. Elément d'enregistrement selon la revendication 1, dans lequel la concentration en aluminium utilisée pour préparer le polymère d'aluminosilicate est maintenue entre 1,5 x 10⁻² et 0,3 mol/l.

10. Elément d'enregistrement selon la revendication 1, dans lequel le rapport molaire alcali/Al utilisé pour préparer le polymère d'aluminosilicate est sensiblement égal à3.

11. Elément d'enregistrement selon la revendication 1, dans lequel le précurseur mixte d'aluminium et de silicium obtenu par hydrolyse d'un mélange de composés d'aluminium et de composés de silicium ne comportant que des fonctions hydrolysables est un produit résultant du mélange en milieu aqueux (i) d'un composé choisi dans le groupe constitué par les sels d'aluminium, les alcoxydes d'aluminium et les halogénoalcoxydes d'aluminium et (ii) d'au moins un composé choisi dans le groupe constitué par les alcoxydes et les chloroalcoxydes de silicium ne comportant que des fonctions hydrolysables.

12. Elément d'enregistrement selon la revendication 11, dans lequel ledit précurseur mixte d'aluminium et de silicium est le produit résultant du mélange (i) d'un halogénure d'aluminium et (ii) d'un alcoxyde de silicium ne comportant que des fonctions hydrolysables.

13. Elément d'enregistrement selon la revendication 12, dans lequel l'alcoxyde de silicium ne comportant que des fonctions hydrolysables est l'orthosilicate de tétraméthyle ou l'orthosilicate de tétraéthyle.

14. Elément d'enregistrement selon la revendication 1, dans lequel le liant hydrophile est la gélatine ou l'alcool polyvinylique.
